# EUROPEAN PATENT SPECIFICATION

(11) **EP 3 888 873 B1**
(45) Date of publication and mention of the grant of the patent: **21.12.2022**
(21) Application number: 21163302.9
(22) Date of filing: 18.03.2021
(51) Int. Cl.: B29C 45/76, B29C 45/77

(54) **INJECTION MOLDING MACHINE**
SPRITZGIESSMASCHINE
MACHINE DE MOULAGE À INJECTION

(30) Priority: 31.03.2020 JP 2020065108
(43) Date of publication of application: 06.10.2021
(73) Proprietor: Sumitomo Heavy Industries, Ltd., Tokyo 141-6025 (JP)
(72) Inventor: YATO, Hiroyasu, Chiba-shi, Chiba, 263-0001, (JP); HOTTA, Daigo, Chiba-shi, Chiba, 263-0001, (JP); ONO, Hajime, Chiba-shi, Chiba, 263-0001, (JP); MIYATAKE, Tsutomu, Chiba-shi, Chiba, 263-0001, (JP)
(74) Representative: Louis Pöhlau Lohrentz

(56) References cited:
- EP-A1- 3 135 455
- EP-A1- 3 372 378
- WO-A2-2005/002829
- Anonymous: "STRAIN AND FORCE SENSORS WITH TECHNOLOGY - SENSORMATE - THE SOLUTION FOR INJECTION MOLDING MACHINES", , 5 November 2015 (2015-11-05), pages 1-12, XP055491826, Retrieved from the Internet: URL:https://www.gefran.com/es/download/430 9/attachment/en [retrieved on 2018-07-11]
- SCHLAEPER: "KRAFTMESSUNG AN VOLLELEKTRISCHEN SPRITZGIESSMASCHINEN", KUNSTSTOFFE SYNTHETICS, VOGT-SCHILD, SOLOTHURN, CH, vol. 141, no. 9, 1 January 2006 (2006-01-01), pages 136-141, XP001249015, ISSN: 1021-0601

## Description

### BACKGROUND OF THE INVENTION

### Field of the Invention

The present invention relates to an injection molding machine.

### Description of Related Art

An injection molding machine described in International Publication No. WO2005/002828 includes a cylinder which heats a molding material, a screw which is disposed to be rotatable and movable forward or rearward inside the cylinder, a plasticizing motor which rotates the screw, and an injection motor which moves the screw forward or rearward. This injection molding machine includes a load detector which detects a load transmitted between the injection motor and the screw. The load detected by the load detector is converted into a pressure acting between the screw and the molding material. International Publication No. 2005/002829 discloses a machine with a rotary and linearly driven machine part and with a force sensor for measuring the force exerted on this machine part. European Patent Publication No. 3372378 discloses an injection molding machine in which the entire length can be shortened. "STRAIN AND FORCE SENSORS WITH TECHNOLOGY - SENSORMATE - THE SOLUTION FOR INJECTION MOLDING MACHINES" (https://Awww.gefran.com/es/download/4309/attachment/en) discloses a sensor for the injection molding machine. European Patent Publication No. 3135455 discloses an injection unit in which the inertia of objects to be driven by the injection motor is small and the pressure applied to the molding material can be accurately detected. The article "KRAFTMESSUNG AN VOLLELEKTRISCHEN SPRITZGIESSMASCHINEN" by SCHLAEPER ("KUNSTSTOFFE SYNTHETICS, VOGT-SCHILD, SOLOTHURN, CH") discloses a sensor with strain gauges.

### SUMMARY OF THE INVENTION

A load detector of International Publication No. WO2005/002828 is disposed in a non-rotating member and is disposed at a position far from a screw. This is because when the load detector is disposed on a rotating member, the load detector is rotated together with the screw, and a wire for transmitting a signal of the load is twisted off.

In the related art, the load detector is disposed at a position farther from the screw than a bearing which rotatably supports the screw so that the load detector does not rotate together with the screw. Therefore, a ratio of a sliding resistance of a mechanical element to the load detected by the load detector is large.

Since the sliding resistance varies, if the ratio of the sliding resistance is large, detection accuracy of a pressure acting between the screw and the molding material becomes low.

An aspect of the present invention provides a technique for improving detection accuracy of a pressure acting between a screw and a molding material.

According to an aspect of the present invention, there is provided an injection molding machine comprising: a cylinder which heats a molding material; a screw which is disposed so as to be rotatable and movable forward or rearward inside the cylinder; a rotation drive source which rotates the screw; a forward/rearward movement drive source which moves the screw forward or rearward; a load detector which detects a load transmitted between the forward/rearward movement drive source and the screw; and a bearing which rotatably supports the screw, in which the load detector detects a load between the screw and the bearing, the injection molding machine further comprises a wireless communication unit which wirelessly transmits a signal of the load detected by the load detector, the wireless communication unit has a rotor which is rotated together with the screw and a stator which is not rotated together with the screw, the rotor and the stator are disposed coaxially, and the wireless communication unit wirelessly transmits the signal from the rotor to the stator.

According to one aspect of the present invention, the accuracy of detecting the pressure acting between the screw and the molding material can be improved.

### BRIEF DESCRIPTION OF THE DRAWINGS

Fig. 1 is a view showing a state when mold opening of an injection molding machine according an embodiment is completed.
Fig. 2 is a view showing a state when a mold of the injection molding machine according to the embodiment is clamped.
Fig. 3 is a view showing a state when injection of an injection unit according to the embodiment starts.
Fig. 4 is a view showing a state when the injection of the injection unit according the embodiment is completed.
Fig. 5 is a partially enlarged view of Fig. 4.
Fig. 6 is a view showing a state when injection of an injection unit according to a first modification example is completed.
Fig. 7 is a view showing a state when injection of an injection unit according to a second modification example is completed.
Fig. 8 is a view showing a state when injection of an injection unit according to a third modification example is completed.
Fig. 9 is a view showing a state when injection of an injection unit according to a fourth modification example is completed.
Fig. 10 is a view showing a state when injection of an injection unit according to a fifth modification example starts.
Fig. 11 is a view showing a state when the injection of the injection unit according to the fifth modification example is completed.
Fig. 12 is a view showing a state when injection of an injection unit according to a sixth modification example is completed.
Fig. 13 is a view showing a state when injection of an injection unit according to a seventh modification example is completed.

### DETAILED DESCRIPTION OF THE INVENTION

Hereinafter, embodiments of the present invention are described with reference to the drawings. In each drawing, the same or corresponding reference symbols are assigned to the same or corresponding configurations, and descriptions thereof are omitted.

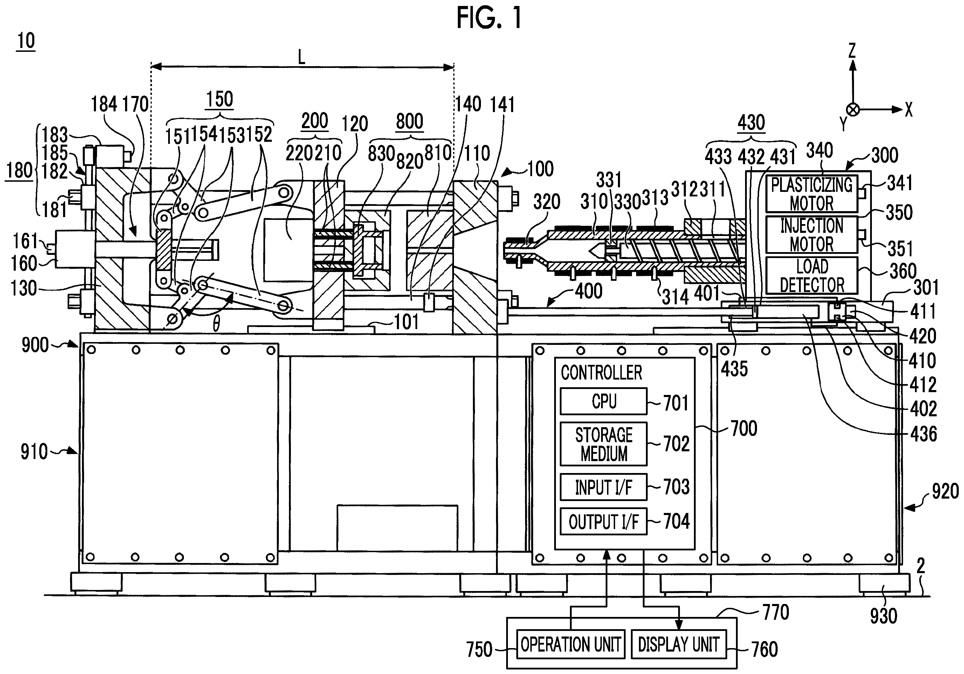

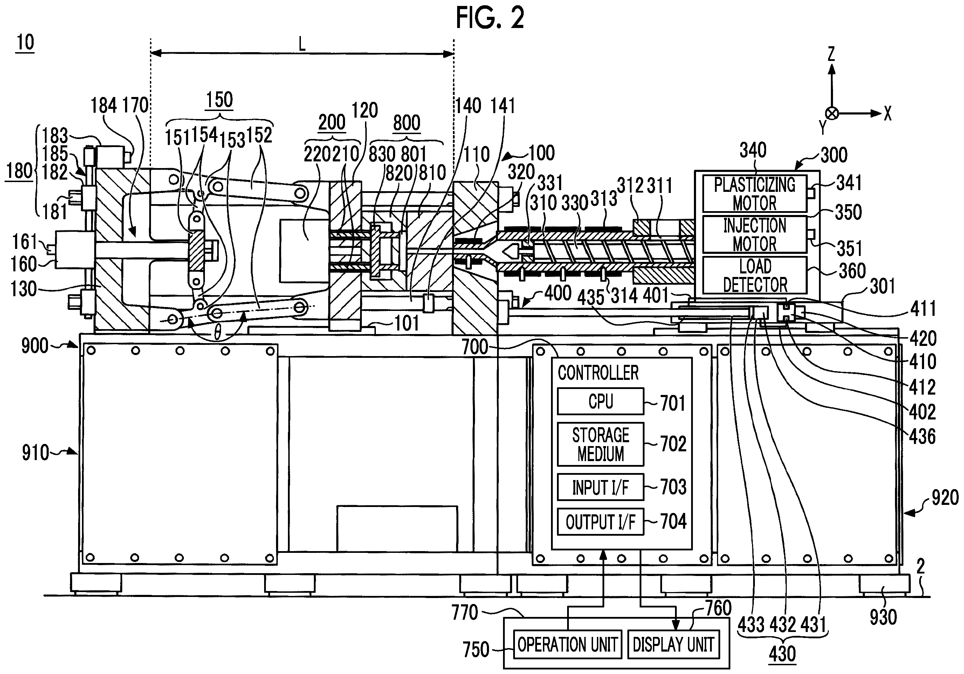

Fig. 1 is a view showing a state when mold opening of an injection molding machine according an embodiment is completed. Fig. 2 is a view showing a state when a mold of the injection molding machine according to the embodiment is clamped. In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 10. A negative side in the Y-axis direction is referred to as an operation side, and a positive side in the Y-axis direction is referred to as a counter operation side.

As shown in Figs. 1 to 2, the injection molding machine 10 includes the mold clamping unit 100 which openings or closes a mold unit 800, an ejector unit 200 which ejects a molding product molded by the mold unit 800, an injection unit 300 which injects a molding material into the mold unit 800, a moving unit 400 which moves the injection unit 300 forward or rearward with respect to the mold unit 800, a controller 700 which controls each component of the injection molding machine 10, and a frame 900 which supports each component of the injection molding machine 10. The frame 900 includes a mold clamping unit frame 910 which supports the mold clamping unit 100 and an injection unit frame 920 which supports the injection unit 300. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 10 will be described.

### (Mold Clamping Unit)

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is opened is defined as a rear side.

The mold clamping unit 100 performs mold closing, pressurization, mold clamping, depressurization, and mold opening of the mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110 to which a stationary mold 810 is attached, a movable platen 120 to which the movable mold 820 is attached, a toggle support 130 which is disposed with a gap from the stationary platen 110, a tie bar 140 which connects the stationary platen 110 and the toggle support 130 to each other, a toggle mechanism 150 which moves the movable platen 120 in the mold opening and closing directions with respect to the toggle support 130, a mold clamping motor 160 which operates the toggle mechanism 150, a motion conversion mechanism 170 which convert a rotary motion of the mold clamping motor 160 into a linear motion, and a mold space adjustment mechanism 180 which adjusts a gap between the stationary platen 110 and the toggle support 130.

The stationary platen 110 is fixed to the mold clamping unit frame 910. A stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, mold closing, pressurization, mold clamping, depressurization, and mold opening of the mold unit 800 are performed.

The toggle support 130 is disposed with a gap from the stationary platen 110, and is placed on the mold clamping unit frame 910 to be movable in mold opening and closing directions. In addition, the toggle support 130 may be movably disposed along a guide which is placed on the mold clamping unit frame 910. The guide of the toggle support 130 may be also used as the guide 101 of the movable platen 120.

In addition, in the present embodiment, the stationary platen 110 is fixed to the mold clamping unit frame 910, and the toggle support 130 is movably disposed in the mold opening and closing directions with respect to the mold clamping unit frame 910. However, the toggle support 130 may be fixed to the mold clamping unit frame 910, and the stationary platen 110 may be movably disposed in the mold opening and closing directions with respect to the mold clamping unit frame 910.

The stationary platen 110 and the toggle support 130 are connected to each other by the tie bar 140 with a gap L therebetween in the mold opening and closing directions. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151 which moves in the mold opening and closing directions, and a pair of link groups which bends and stretches due to a movement of the crosshead 151. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be coupled to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated.

In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

The number of cavity spaces 801 may be one or more. When a plurality of cavity spaces 801 are provided, a plurality of molding products can be obtained at the same time. An insert material may be disposed in a portion of the cavity space 801 and the other portion of the cavity space 801 may be filled with the molding material. A molding product in which the insert material and the molding material are integrated with each other can be obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are disposed in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are disposed in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed so that a predetermined mold clamping force when the mold is clamped is obtained. For example, in the mold space adjustment, the gap L between the stationary platen 110 and the toggle support 130 is adjusted so that the link angle θ of the toggle mechanism 150 at the time of a mold touch when the movable mold 820 comes into contact with the stationary mold 810 becomes a predetermined angle.

The mold clamping unit 100 has a mold space adjustment mechanism 180. The mold space adjustment mechanism 180 performs the mold space adjustment by adjusting the gap L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a driving gear is attached to an output shaft of the mold space adjustment motor 183, and an intermediate gear which engages with a plurality of driven gears and driving gears is rotatably held by a central portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, X-axis positive direction) of the movable platen 120 when the mold is closed is defined as the front side, and the movement direction (for example, X-axis negative direction) of the movable platen 120 when the mold is opened is defined as the rear side.

The ejector unit 200 is attached to the movable platen 120 and moves forward and rearward together with the movable platen 120. The ejector unit 200 includes an ejector rod 210 which ejects the molding product from the mold unit 800, and a drive mechanism 220 which moves the ejector rod 210 in a movement direction (X-axis direction) of the movable platen 120.

The ejector rod 210 is disposed to be movable forward or rearward through a through-hole of the movable platen 120. A front end portion of the ejector rod 210 comes into contact with a movable member 830 which is disposed to be movable forward or rearward inside the movable mold 820. The front end portion of the ejector rod 210 may be connected to the movable member 830 or may not be connected to the movable member 830.

For example, the drive mechanism 220 includes an ejector motor and a motion conversion mechanism that converts a rotary motion of the ejector motor into a linear motion of the ejector rod 210. The motion conversion mechanism includes a screw shaft and a screw nut which is screwed to the screw shaft. A ball or a roller may be interposed between the screw shaft and the screw nut.

The ejector unit 200 performs an ejection process under the control of the controller 700. In the ejection process, the ejector rod 210 is moved forward from a standby position to an ejection position at a set movement speed, and thus, the movable member 830 moves forward and the molding product is ejected. Thereafter, the ejector motor is driven to move the ejector rod 210 rearward at a set movement speed, and thus, the movable member 830 moves rearward to an original standby position.

For example, a position or movement speed of the ejector rod 210 is detected using an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, X-axis negative direction) of a screw 330 during filling is referred to as a front side, and a movement direction (for example, X-axis positive direction) of the screw 330 during plasticizing is referred to as a rear side.

The injection unit 300 is installed on a slide base 301, and the slide base 301 is disposed so as to be movable forward or rearward with respect to the injection unit frame 920. The injection unit 300 is disposed to be movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310 which heats a molding material, a nozzle 320 which is provided on a front end portion of the cylinder 310, a screw 330 which is disposed to be movable forward or rearward and rotatable in the cylinder 310, a plasticizing motor 340 which rotates the screw 330, an injection motor 350 which moves the screw 330 forward or rearward, and a load detector 360 which detects a load transmitted between the injection motor 350 and the screw 330.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed in a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on the front end portion of the cylinder 310 and presses the mold unit 800. The heating unit 313 and the temperature measurer 314 are provided on an outer periphery of the nozzle 320. The controller 700 controls the heating unit 313 so that a detection temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relative to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relative to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The load detector 360 detects a load transmitted between the injection motor 350 and the screw 330. The detected load is converted into a pressure by the controller 700. The load detector 360 is provided in a transmission path of a load between the injection motor 350 and the screw 330 and detects a load applied to the load detector 360.

The load detector 360 sends a signal of the detected load to the controller 700. The load detected by the load detector 360 is converted into the pressure acting between the screw 330 and the molding material, and is used to control or monitor the pressure received by the screw 330 from the molding material, a back pressure with respect to the screw 330, the pressure acting on the molding material from the screw 330, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front portion of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the load detector 360. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are disposed in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are disposed in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the load detector 360. In a case where the pressure of the screw 330 is a setting pressure or less, the screw 330 moves forward at the set movement speed. Meanwhile, in a case where the pressure of the screw 330 exceeds the setting pressure, in order to protect the mold, the screw 330 moves forward at a movement speed slower than the set movement speed so that the pressure of the screw 330 is the setting pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the load detector 360. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Moving Unit)

Similarly to the descriptions of the injection unit 300, in descriptions of the moving unit 400, the movement direction (for example, X-axis negative direction) of the screw 330 during filling is referred to as a front side, and the movement direction (for example, X-axis positive direction) of the screw 330 during plasticizing is referred to as a rear side.

The moving unit 400 moves the injection unit 300 rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed against the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the mold clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process. The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the mold closing process. Moreover, the ejection process may be performed the mold opening process. In a case where an on/off valve which opens or closes the flow path of the nozzle 320 is provided, the mold opening process may be performed during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and it is possible to prevent the molding material from leaking from the nozzle 320 before the filling process starts.

The controller 700 is connected to an operation unit 750 which receives input operations by a user or a display unit 760 which displays a screen. For example, the operation unit 750 and the display unit 760 may include a touch panel 770 to be integrated with each other. The touch panel 770 as the display unit 760 displays the screen under the control of the controller 700. For example, information such as setting of the injection molding machine 10 and a current state of the injection molding machine 10 may be displayed on the screen of the touch panel 770. Further, for example, an operator such as a button which receives an input operation by the user or an input field may be displayed on the screen of the touch panel 770. The touch panel 770 as the operation unit 750 detects the input operation on the screen by the user and outputs a signal corresponding to the input operation to the controller 700. As a result, for example, the user operates the operator provided on the screen while checking the information displayed on the screen, and thus, can perform the setting (including inputting the set value) of the injection molding machine 10 or the like. Further, the user operates the operator provided on the screen, and thus, can perform an operation of the injection molding machine 10 corresponding to the operator. Moreover, for example, the operation of the injection molding machine 10 may be an operation (including stopping) of the mold clamping unit 100, the ejector unit 200, the injection unit 300, the moving unit 400, or the like. Further, the operation of the injection molding machine 10 may be switching of the display screen displayed on the touch panel 770 as the display unit 760.

In addition, although the operation unit 750 and the display unit 760 of the present embodiment are described as being integrated as a touch panel 770, the operation unit 750 and the display unit 760 may be provided independently. In addition, a plurality of the operation units 750 may be provided. The operation unit 750 and the display unit 760 are disposed on an operation side (Y-axis negative direction) of the mold clamping unit 100 (more specifically, the stationary platen 110).

### [Details of Injection Unit]

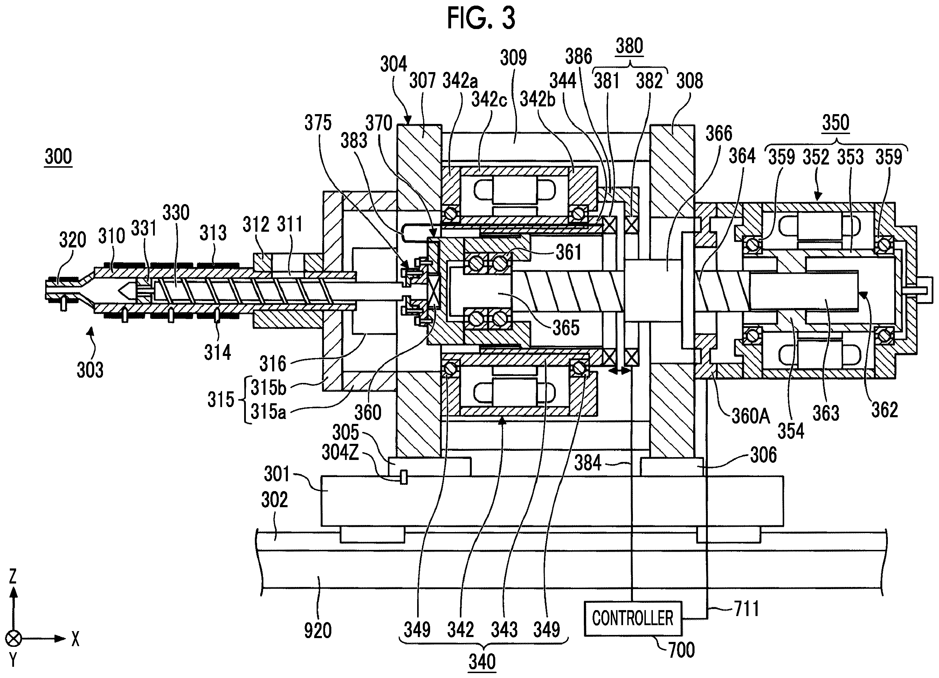

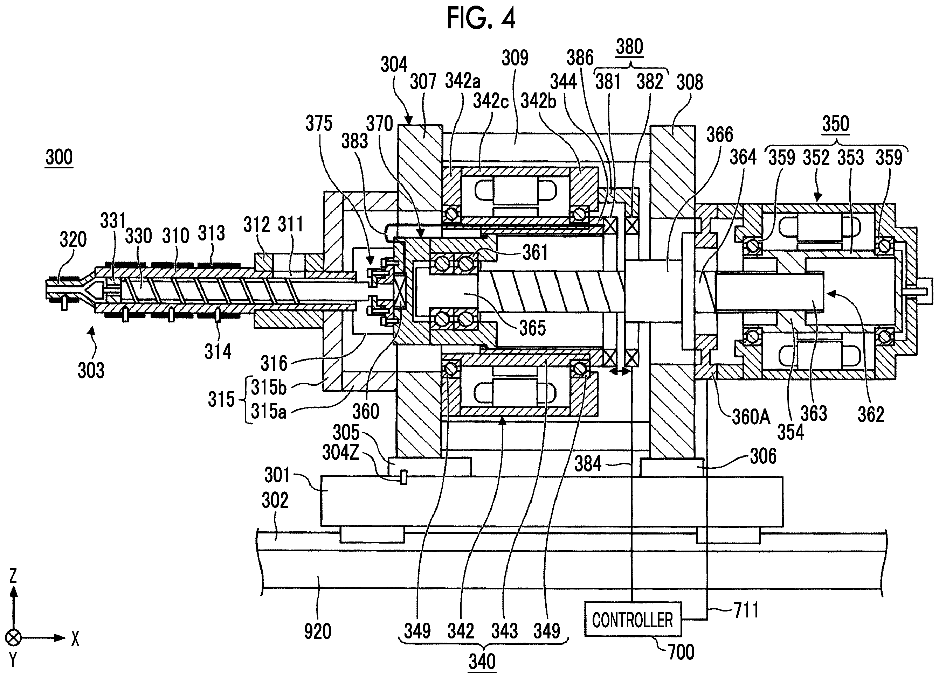

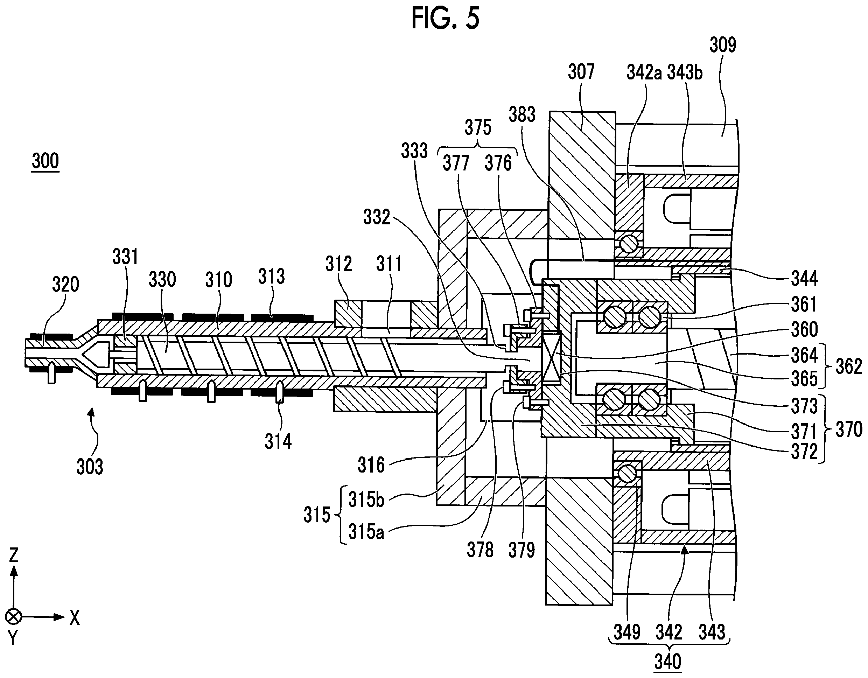

Fig. 3 is a view showing a state when injection of an injection unit according to the embodiment starts. Fig. 4 is a view showing a state when the injection of the injection unit according the embodiment is completed. Fig. 5 is a partially enlarged view of Fig. 4. The injection unit 300 has an injection unit main body 303 and a support frame 304 which supports the injection unit main body303. For example, the injection unit main body 303 includes the cylinder 310, the nozzle 320, the screw 330, the plasticizing motor 340, the injection motor 350, and the load detector 360. The injection unit main body 303 further includes a bearing 361 which rotatably supports the screw 330, a drive shaft 362 which is moved forward or rearward while being rotated by the injection motor 350, and a bearing holder 370 which rotatably supports the drive shaft 362 via the bearing 361.

The support frame 304 is installed on the slide base 301. The slide base 301 moves forward or rearward along two guides 302 (only one is shown in Figs. 3 and 4). The two guides 302 are placed on the injection unit frame 920. Each of the two guides 302 extends in the X-axis direction. The two guides 302 are disposed with a gap therebetween in the Y-axis direction. The support frame 304 is installed on the slide base 301 so as to be turnable around a vertical turning shaft 304Z. The injection unit main body 303 can be turned together with the support frame 304.

The support frame 304 has a front turning plate 305 and a rear turning plate 306. The front turning plate 305 and the rear turning plate 306 are slidably mounted on an upper surface of the slide base 301. The turning shaft 304Z is disposed at a predetermined position on the front turning plate 305. The rear turning plate 306 is disposed behind the front turning plate 305.

The support frame 304 has a front flange 307, a rear flange 308, and a plurality of connection rods 309. The front flange 307 is attached to the front turning plate 305. The rear flange 308 is attached to the rear turning plate 306. The front flange 307 and the rear flange 308 are connected to each other with a gap therebetween by the connection rod 309.

The cylinder 310 and a plasticizing motor 340 are attached to the front flange 307. The cylinder 310 is disposed in front of the front flange 307 and is attached to the front flange 307 via a tubular body 315. The plasticizing motor 340 is disposed behind the front flange 307 and in front of the rear flange 308.

Meanwhile, the injection motor 350 is attached to the rear flange 308. The injection motor 350 is disposed behind the rear flange 308 and is attached to the rear flange 308 via a second load detector 360A described later. The second load detector 360A may be omitted, and the injection motor 350 may be directly attached to the rear flange 308.

The plasticizing motor 340 rotates the screw 330. The plasticizing motor 340 has a stator 342 which is fixed to the front flange 307, a rotor 343 which rotates inside the stator 342, and a bearing 349 which rotatably supports the rotor 343. The stator 342 includes a front flange 342a which holds the bearing 349, a rear flange 342b which holds the bearing 349, and a housing 342c which connects the front flange 342a and the rear flange 342b to each other. A rotary motion of the plasticizing motor 340 is transmitted to the bearing holder 370, and further transmitted from the bearing holder 370 to the screw 330.

The bearing holder 370 has a screw attachment portion 372 to which the screw 330 is attached, and a plasticizing spline shaft 371 to which the rotor 343 of the plasticizing motor 340 is spline-coupled. The plasticizing spline shaft 371 is disposed inside the rotor 343 of the plasticizing motor 340. The rotor 343 includes a plasticizing spline nut 344.

The plasticizing spline nut 344 has a plurality of key grooves disposed at equal intervals in a circumferential direction on an inner peripheral surface thereof. Meanwhile, the plasticizing spline shaft 371 has a plurality of keys disposed at equal intervals in the circumferential direction on the outer peripheral surface thereof. The plasticizing spline shaft 371 and the plasticizing spline nut 344 are spline-coupled to each other. The number of key grooves and the number of keys may be one.

The injection motor 350 moves the screw 330 forward or rearward. The injection motor 350 includes a stator 352 which is fixed to the rear flange 308 via the second load detector 360A, a rotor 353 which rotates inside the stator 352, and a bearing 359 which rotatably supports the rotor 353. The rotary motion of the injection motor 350 is converted into a rotary linear motion of the drive shaft 362, and further converted into a linear motion of the bearing holder 370. As the bearing holder 370 moves forward or rearward, the screw 330 moves forward or rearward.

The drive shaft 362 has an injection spline shaft 363, a screw shaft 364, and a rotary shaft 365 on the same straight line in this order from a rear side to a front side.

The injection spline shaft 363 is disposed inside the rotor 353 of the injection motor 350. The rotor 353 includes an injection spline nut 354. The injection spline nut 354 has a plurality of key grooves disposed at equal intervals in the circumferential direction on an inner peripheral surface thereof. Meanwhile, the injection spline shaft 363 has a plurality of keys disposed at equal intervals in the circumferential direction on an outer peripheral surface thereof. The injection spline shaft 363 and the injection spline nut 354 are spline-coupled to each other. Moreover, the number of key grooves and the number of keys may be one.

The screw shaft 364 is screwed with the screw nut 366. A ball or a roller may be interposed between the screw shaft 364 and the screw nut 366. Since the screw nut 366 is fixed to the rear flange 308 via the second load detector 360A, the screw nut 366 does not rotate together with the screw shaft 364. Therefore, the screw shaft 364 moves forward or rearward while rotating. The injection spline shaft 363 and the injection spline nut 354 are spline-coupled to each other so that the screw shaft 364 can move forward or rearward while rotating.

The rotary shaft 365 is held by the bearing holder 370 via the bearing 361. The bearing holder 370 has the tubular plasticizing spline shaft 371, and the bearing 361 is fixed to an inner peripheral surface of the plasticizing spline shaft 371. The bearing 361 has an inner ring which rotates with the rotary shaft 365 and an outer ring which is fixed to the plasticizing spline shaft 371. The bearing 361 prevents the rotational driving force from being transmitted from the rotary shaft 365 to the bearing holder 370.

As the rotary shaft 365 moves forward or rearward while rotating, the bearing holder 370 moves forward or rearward, and the screw 330 moves forward or rearward. When the screw 330 moves forward or rearward, the plasticizing motor 340 does not move forward or rearward. This is because the plasticizing spline nut 344 of the plasticizing motor 340 and the plasticizing spline shaft 371 of the bearing holder 370 are spline-coupled to each other. Since the plasticizing motor 340 is not included in a drive target of the injection motor 350, an inertia of the drive target of the injection motor 350 is small, and an acceleration of the screw 330 when the forward movement of the screw 330 starts is fast.

Moreover, the structure of the injection unit 300 is not limited to the structures shown in Figs. 3 and 4. For example, disposition of the drive source (for example, the plasticizing motor 340 and the injection motor 350) for driving the screw 330 is not limited to the disposition shown in Figs. 3 and 4. Specifically, in the present embodiment, a rotation center line of the screw 330, a rotation center line of the plasticizing motor 340, and a rotation center line of the injection motor 350 are disposed on the same straight line. However, the rotational center lines may not be disposed on the same straight line.

Further, a structure of a transmission mechanism for transmitting the driving force of the drive source to the screw 330 is not limited to the structure shown in Figs. 3 and 4. The structure of the transmission mechanism is appropriately changed according to the disposition of the drive source for driving the screw 330. For example, when the rotation center line of the plasticizing motor 340 and the rotation center line of the screw 330 parallel to each other are disposed so as to be offset in a direction orthogonal to the rotation center lines, a timing belt may be used. Similarly, when the rotation center line of the injection motor 350 and the rotation center line of the screw 330 parallel to each other are disposed so as to be offset in a direction orthogonal to the rotation center lines, a timing belt may be used.

### (Disposition of Load Detector)

As described above, the load detector 360 detects the load transmitted between the injection motor 350 and the screw 330. The load detected by the load detector 360 is converted into the pressure acting between the screw 330 and the molding material, and is used to control or monitor the pressure received by the screw 330 from the molding material, the back pressure on the screw 330, and the pressure acting on the molding material from the screw 330.

As shown in Fig. 5, the load detector 360 detects a load between the screw 330 and the bearing 361. Since the load detector 360 is disposed near the screw 330, a ratio of a sliding resistance of a mechanical element to the load detected by the load detector 360 can be reduced. Even if the sliding resistance varies, since the ratio of the sliding resistance is small, accuracy of detecting the pressure acting between the screw 330 and the molding material can be improved.

The load detector 360 may be disposed immediately behind the screw 330. For example, the screw 330 is attached to the bearing holder 370 via the load detector 360. The bearing holder 370 has a recessed portion 373 which accommodates the load detector 360 on a front end surface of the bearing holder 370. For example, the load detector 360 is a column type detector. The front end surface of the load detector 360 is in contact with the screw 330 at a central portion thereof and is in contact with the coupling 375 at a peripheral edge portion thereof. The coupling 375 couples the screw 330 and the bearing holder 370 to each other.

The coupling 375 has a spline nut 376 to which the spline shaft 332 formed at a rear end portion of the screw 330 is spline-coupled, and a flange 377 which presses the spline shaft 332 from the front side. The flange 377 is fitted into a groove 333 of the screw 330. The groove 333 is formed in front of the spline shaft 332. The flange 377 is divided into two arc-shaped divided bodies, fitted into the groove 333, and presses the spline shaft 332 from the front side.

The flange 377 is fastened to the spline nut 376 by a first bolt 378. The spline nut 376 is fastened to the bearing holder 370 by a second bolt 379 and presses the load detector 360 from the front side. An operation of tightening or loosening the first bolt 378 and the second bolt 379 is performed from a window 316 of the tubular body 315 disposed between the front flange 307 and the cooler 312.

The tubular body 315 includes a tubular portion 315a protruding forward from the front flange 307 and an inner flange portion 315b protruding inward of the tubular body 315 from the front end surface of the tubular portion 315a. The window 316 is formed in the tubular portion 315a. An outer edge of the cylinder 310 is fixed to an inner edge of the inner flange portion 315b.

As described above, the load detector 360 is disposed immediately behind the screw 330. Therefore, the ratio of the sliding resistance of the mechanical element to the load detected by the load detector 360 can be made smaller. Therefore, the accuracy of detecting the pressure acting between the screw 330 and the molding material can be further improved.

Meanwhile, since the load detector 360 detects the load between the screw 330 and the bearing 361, the load detector 360 is rotated together with the screw 330.

Therefore, as shown in Figs. 3 and 4, the injection molding machine 10 further includes a wireless communication unit 380 that wirelessly transmits the signal of the load detected by the load detector 360. The wireless communication unit 380 includes a transmitter 381 which transmits the signal of the load and a receiver 382 which receives the signal of the load transmitted from the transmitter 381.

The transmitter 381 and the receiver 382 transmit and receive a signal by radio waves or light. Since the transmitter 381 and the receiver 382 are not connected to each other by a wire for transmitting the signal, it is possible to prevent the wire from being twisted off by the rotation of the load detector 360.

It possible to dispose the load detector 360 between the screw 330 and the bearing 361 by the wireless communication unit 380. Since the load detector 360 is disposed near the screw 330, the accuracy of detecting the pressure acting between the screw 330 and the molding material can be improved.

The transmitter 381 is a rotor which is rotated together with the screw 330. The transmitter 381 is provided outside the load detector 360, and is connected to the load detector 360 by a wire 383. The wire 383 transmits the signal of the load detected by the load detector 360 from the load detector 360 to the transmitter 381. Since the wire 383 is rotated together with both the load detector 360 and the transmitter 381, the wire is not twisted off.

For example, the transmitter 381 is attached to a rear end surface of the plasticizing spline nut 344 and is provided in a ring shape. The transmitter 381 is directly connected to the rear end surface of the plasticizing spline nut 344, but may be connected to the rear end surface via a connection member (not shown) . The wire 383 passes through a hole of the bearing holder 370, a hole of the rotor 343 of the plasticizing motor 340, and a hole of the plasticizing spline nut 344, and electrically connects the load detector 360 and the transmitter 381 to each other.

The wire 383 is loosened between the bearing holder 370 and the rotor 343 of the plasticizing motor 340. When the bearing holder 370 is moved forward or rearward by the injection motor 350, it is possible to prevent an excessive tension from acting on the wire 383 and prevent the wire 383 from being broken. In addition, a support member for deformably supporting the wire 383, for example, a Cable Bear (registered trademark) may be provided between the bearing holder 370 and the rotor 343 of the plasticizing motor 340.

When the transmitter 381 is provided outside the load detector 360, a distance between the transmitter 381 and the receiver 382 can be shortened, and short-distance wireless communication is possible. The transmitter 381 may be provided inside the load detector 360 as long as long-distance wireless communication is possible.

The transmitter 381 and the receiver 382 are disposed so as to face each other with a gap therebetween in the axial direction of the screw 330. The transmitter 381 and the receiver 382 may be disposed so as to face each other with a gap therebetween in the radial direction of the screw 330. In this case, for example, the transmitter 381 is disposed closer to the screw 330 than the receiver 382. This is because the transmitter 381 is rotated together with the screw 330, unlike the receiver 382.

The receiver 382 is a stator which cannot be rotated with the screw 330. The receiver 382 is provided outside the controller 700 and is connected to the controller 700 by a wire 384. The wire 384 transmits the signal of the load received by the receiver 382 from the receiver 382 to the controller 700. There is no wire 384, and the signal of the load may be wirelessly transmitted from the receiver 382 to the controller 700.

For example, the receiver 382 is fixed to the stator 342 of the plasticizing motor 340 and is provided in a ring shape. For example, the receiver 382 and the rear flange 342b of the stator 342 are connected to each other by the connection member 386. The receiver 382 is disposed coaxially with the transmitter 381 behind the transmitter 381. When the bearing holder 370 is moved forward or rearward by the injection motor 350, the load detector 360 is moved forward or rearward. However, a distance between the receiver 382 and the transmitter 381 is kept constant. Therefore, stable wireless communication is possible.

In the present embodiment, the connection member 386 connects the receiver 382 and the rear end surface of the rear flange 342b of the plasticizing motor 340 to each other. However, for example, the receiver 382 and an outer edge of the screw nut 366 may be connected to each other, or the receiver 382 and a front end surface of the rear flange 308 of the support frame 304 may be connected to each other. Further, the connection member 386 may be omitted, and the receiver 382 may be directly connected to the rear end surface of the rear flange 342b of the plasticizing motor 340, the outer edge of the screw nut 366, or the front end surface of the rear flange 308 of the support frame 304. In either case, since both the receiver 382 and the transmitter 381 are immovable forward or rearward relative to the plasticizing motor 340, the distance between the receiver 382 and the transmitter 381 is kept constant when the injection motor 350 is driven.

When the receiver 382 is provided outside the controller 700, the distance between the receiver 382 and the transmitter 381 can be shortened, and short-distance wireless communication is possible. The receiver 382 may be provided inside the controller 700 as long as long-distance wireless communication is possible.

The wireless communication unit 380 may wirelessly supply electric power consumed by the load detector 360 from the receiver 382 to the transmitter 381. The electric power is fed from the transmitter 381 to the load detector 360 by the wire 383 or the like. Unlike a case where a battery is mounted inside the load detector 360, there is no concern that the battery will run out, and there is no need to replace the battery.

If the distance between the transmitter 381 and the receiver 382 is short and the distance is constant, non-radiative wireless power supply can be adopted. The wireless power supply method is an electromagnetic coupling type in the present embodiment, but may be an electromagnetic induction type, a magnetic field resonance type, or the like. The electromagnetic coupling type, the electromagnetic induction type, and the magnetic field resonance type are all non-radiative types.

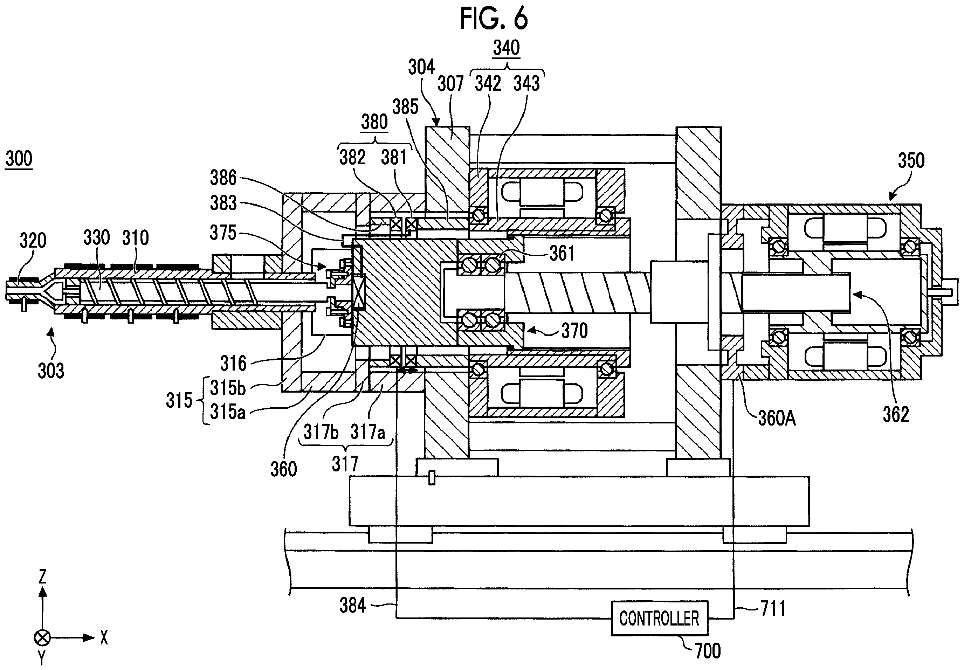

As shown in Figs. 3 and 4, the wireless communication unit 380 may be disposed on a side opposite to the cylinder 310 with reference to the plasticizing motor 340. That is, the wireless communication unit 380 may be disposed behind the plasticizing motor 340. As compared with the case where the wireless communication unit 380 is disposed in front of the plasticizing motor 340 as shown in Fig. 6, even if a gap between the front flange 307 and the cooler 312 is small, the first bolt 378 and the second bolt 379 can be operated from the window 316 of the tubular body 315.

The injection molding machine 10 may include the second load detector 360A in addition to the load detector 360. The second load detector 360A detects the load transmitted between the injection motor 350 and the screw 330, similarly to the load detector 360. However, unlike the load detector 360, the second load detector 360A detects the load not between the screw 330 and the bearing 361 but behind the bearing 361. For example, the second load detector 360A is a washer type detector and is disposed between the rear flange 308 and the injection motor 350.

The load detected by the second load detector 360A also includes the sliding resistance of the mechanical element. For example, the sliding resistance of the mechanical element includes a sliding resistance between an outer ring and an inner ring of the bearing 361, a sliding resistance between the screw shaft 364 and the screw nut 366, a sliding resistance between the injection spline shaft 363 and the injection spline nut 354, and a sliding resistance between the plasticizing spline shaft 371 and the plasticizing spline nut 344.

Unlike the load detector 360, the second load detector 360A detects the load not between the screw 330 and the bearing 361 but behind the bearing 361. Therefore, unlike the load detector 360, the second load detector 360A cannot be rotated with the screw 330. Therefore, even when the second load detector 360A and the controller 700 are connected to each other by a wire 711, the wire 711 is not twisted off.

In general, wired communication has a risk of communication disconnection lower than that of wireless communication. Therefore, the signal of the load can be reliably transmitted from the second load detector 360A to the controller 700 via the wire 711. When the signal from the load detector 360 is interrupted, the controller 700 can continuously control the injection unit 300 using the signal from the second load detector 360A.

The controller 700 may monitor a difference between the load detected by the load detector 360 and the load detected by the second load detector 360A. When a magnitude of the difference is larger than a threshold value, the sliding resistance is large and some abnormalities occur. Therefore, the controller 700 may prohibit the operation of the injection unit 300.

The controller 700 may control the plasticizing process based on the load detected by the load detector 360, and may control the injection process based on the load detected by the second load detector 360A. Generally, the load in the plasticizing process is smaller than the load in the injection process. Therefore, in the plasticizing process, an influence of the sliding resistance is larger than that in the injection process. Therefore, in the plasticizing process, the load detector 360 is used. In the injection process, the load detector 360 may be used. However, if the second load detector 360A is used, those having different upper limits of the load which can be detected can be used. If the upper limit of the load which can be detected by the load detector 360 is made smaller than the upper limit of the load which can be detected by the second load detector 360A, resolution of the load detector 360 can be improved and a small load generated in the plasticizing process can be detected accurately. Meanwhile, in the injection process, a load larger than the upper limit of the load which can be detected by the load detector 360 is generated, and thus, the second load detector 360A is used.

### (First Modification Example)

Fig. 6 is a view showing a state when injection of an injection unit according to a first modification example is completed. Hereinafter, differences between the present modification example and the above embodiment will be mainly described. While the wireless communication unit 380 of the above embodiment is disposed behind the plasticizing motor 340, the wireless communication unit 380 of the present modification example is disposed in front of the plasticizing motor 340. According to the present modification example, the length of the wire 383 can be shortened because the wire 383 does not have to pass through the hole or the like of the rotor 343 of the plasticizing motor 340.

For example, the transmitter 381 of the wireless communication unit 380 is connected to the front end surface of the rotor 343 of the plasticizing motor 340 via a connection member 385 and is provided in a ring shape. The connection member 385 connects the transmitter 381 and the front end surface of the rotor 343 of the plasticizing motor 340 to each other. The wire 383 passes through the hole of the bearing holder 370 and electrically connects the load detector 360 and the transmitter 381 to each other. The wire 383 is loosened between the bearing holder 370 and the transmitter 381.

A second tubular body 317 is disposed between the front flange 307 and the tubular body 315. The second tubular body 317 includes a second tubular portion 317a which protrudes forward from the front flange 307 and a second inner flange portion 317b which protrudes from a front end surface of the second tubular portion 317a to an inside of the second tubular portion 317a. The wireless communication unit 380 is housed inside the second tubular portion 317a.

For example, the receiver 382 of the wireless communication unit 380 is connected to a rear end surface of the second inner flange portion 317b via the connection member 386, and is provided in a ring shape. In the present modification example, the connection member 386 connects the receiver 382 and the rear end surface of the second inner flange portion 317b to each other. However, for example, the connection member 386 may connect the receiver 382 and an inner edge of the second tubular portion 317a to each other. Further, the connection member 386 may be omitted, and the receiver 382 may be directly connected to the rear end surface of the second inner flange portion 317b or the inner edge of the second tubular portion 317a.

The transmitter 381 and the receiver 382 are disposed so as to face each other with a gap therebetween in the axial direction of the screw 330. The receiver 382 is disposed coaxially with the transmitter 381 in front of the transmitter 381. When the bearing holder 370 is moved forward or rearward by the injection motor 350, the load detector 360 is moved forward or rearward. However, the distance between the receiver 382 and the transmitter 381 is kept constant. If both the receiver 382 and the transmitter 381 are unmovable forward or rearward relative to the plasticizing motor 340, the distance between the receiver 382 and the transmitter 381 is kept constant when the injection motor 350 is driven.

The wireless communication unit 380 is disposed in front of the plasticizing motor 340. The second tubular body 317 is disposed between the tubular body 315 and the front flange 307 so that the first bolt 378 and the second bolt 379 can be operated from the window 316 of the tubular body 315. The tubular body 315 includes the tubular portion 315a which protrudes forward from the second inner flange portion 317b of the second tubular body 317, and the inner flange portion 315b which protrudes from the front end surface of the tubular portion 315a to the inside of the tubular portion 315a. The outer edge of the cylinder 310 is fixed to the inner edge of the inner flange portion 315b. The window 316 is formed in the tubular portion 315a.

The coupling 375 is disposed on the cylinder 310 side with reference to the wireless communication unit 380. That is, the coupling 375 is disposed in front of the wireless communication unit 380. The first bolt 378 and the second bolt 379 can be operated from the window 316 of the tubular body 315. Since the coupling 375 is disposed in front of the wireless communication unit 380, a front-rear length of the bearing holder 370 is long.

### (Second Modification Example]

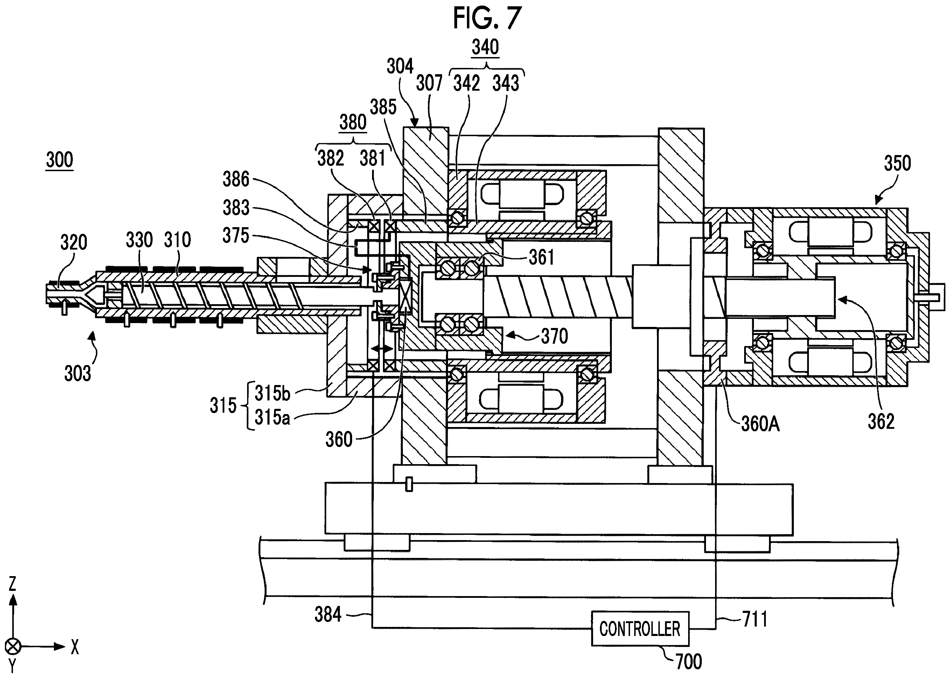

Fig. 7 is a view showing a state when injection of an injection unit according to a second modification example is completed. Hereinafter, differences between the present modification example and the first modification example will be mainly described. While the second tubular body 317 is provided in the first modification example, in the present modification example, the second tubular body 317 is not provided, and the wireless communication unit 380 is disposed inside the tubular body 315. According to the present modification example, since the second tubular body 317 is not provided, the front-rear length of the injection unit 300 can be shortened.

For example, the transmitter 381 of the wireless communication unit 380 is connected to the front end surface of the rotor 343 of the plasticizing motor 340 via the connection member 385 and is provided in a ring shape. The connection member 385 connects the transmitter 381 and the front end surface of the rotor 343 of the plasticizing motor 340 to each other.

Meanwhile, for example, the receiver 382 of the wireless communication unit 380 is connected to the rear end surface of the inner flange portion 315b via the connection member 386, and is provided in a ring shape. The transmitter 381 and the receiver 382 are disposed so as to face each other with a gap therebetween in the axial direction of the screw 330.

In the present modification example, the connection member 386 connects the receiver 382 and the rear end surface of the inner flange portion 315b to each other. However, for example, the connection member 386 may connect the receiver 382 and the inner edge of the tubular portion 315a to each other. Further, the connection member 386 may be omitted, and the receiver 382 may be directly connected to the rear end surface of the inner flange portion 315b or the inner edge of the tubular portion 315a.

### (Third Modification Example]

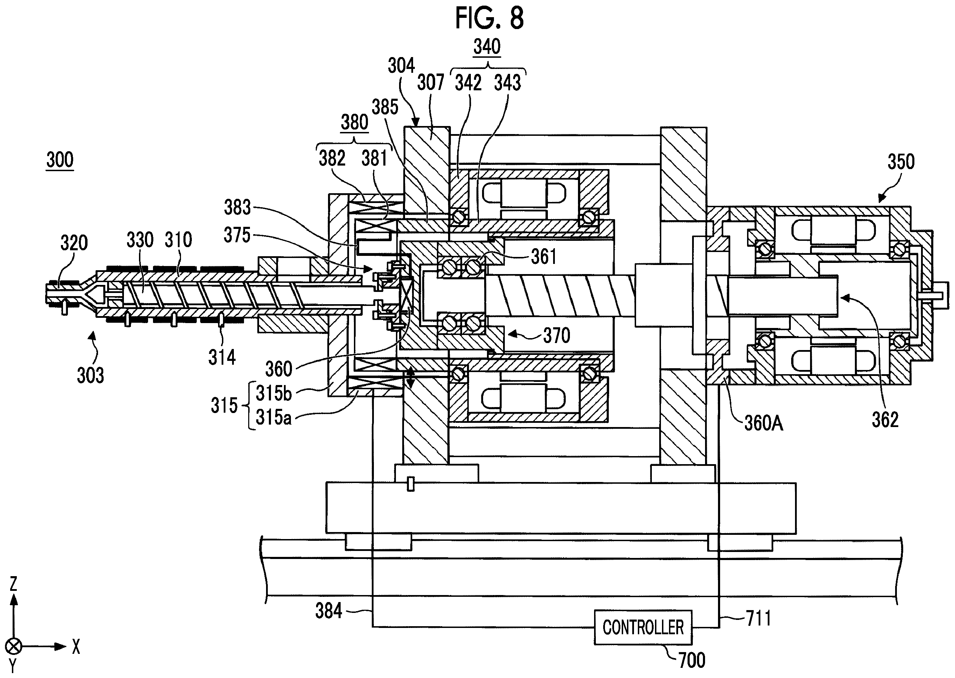

Fig. 8 is a view showing a state when injection of an injection unit according to a third modification example is completed. Hereinafter, differences between the present modification example and the second modification example will be mainly described. While the transmitter 381 and the receiver 382 are disposed to face each other with a gap therebetween in the axial direction of the screw 330 in the second modification example, in the present modification example, the transmitter 381 and the receiver 382 are disposed to face each other with a gap therebetween in a radial direction of the screw 330.

For example, the transmitter 381 is disposed closer to the screw 330 than the receiver 382. This is because the transmitter 381 is rotated together with the screw 330, unlike the receiver 382. As shown in Fig. 8, an outer peripheral surface of the ring-shaped transmitter 381 and an inner peripheral surface of the ring-shaped receiver 382 are disposed to face each other at a regular interval.

For example, the transmitter 381 is connected to the front end surface of the rotor 343 of the plasticizing motor 340 via the connection member 385 and is provided in a ring shape. The connection member 385 connects the transmitter 381 and the front end surface of the rotor 343 of the plasticizing motor 340 to each other.

Meanwhile, for example, the receiver 382 is directly connected to the inner edge of the tubular portion 315a. The receiver 382 may be directly connected to the rear end surface of the inner flange portion 315b or the front end surface of the front flange 307. Further, the receiver 382 may be connected to the inner edge of the tubular portion 315a, the rear end surface of the inner flange portion 315b, or the front end surface of the front flange 307 via a connection member (not shown).

In the present modification example as well, the second tubular body 317 (see Fig. 6) may be disposed between the tubular body 315 and the front flange 307, as in the first modification example. The wireless communication unit 380 is accommodated inside the second tubular body 317. The coupling 375 can be disposed in front of the wireless communication unit 380, and the first bolt 378 and the second bolt 379 can be operated from the window 316 of the tubular body 315.

### (Fourth Modification Example]

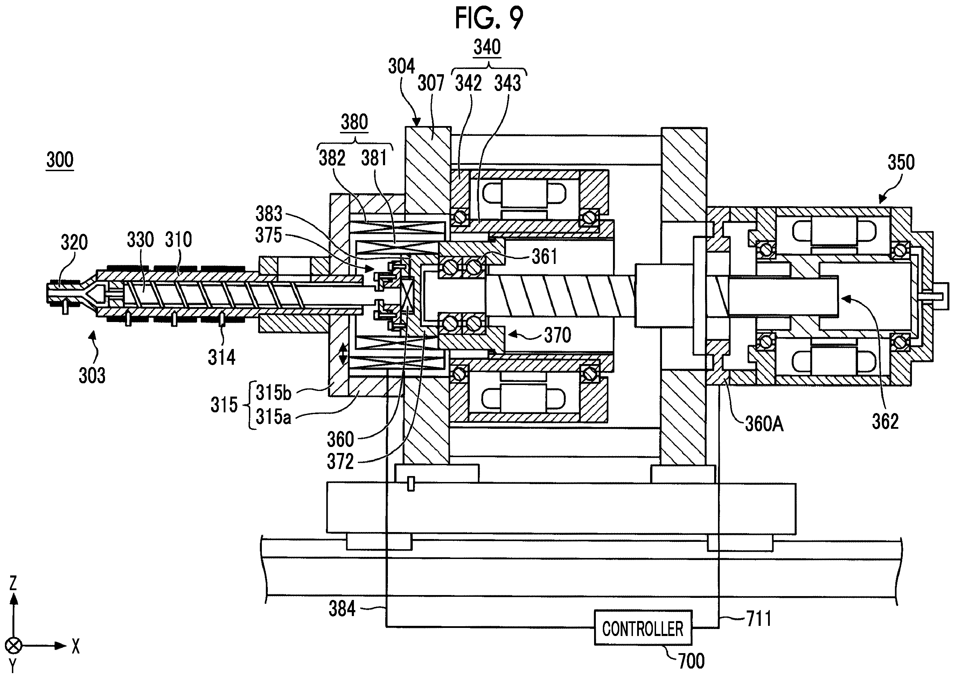

Fig. 9 is a view showing a state when injection of an injection unit according to a fourth modification example is completed. Hereinafter, differences between the present modification example and the third modification example will be mainly described. While the transmitter 381 does not move forward or rearward together with the bearing holder 370 in the third modification example, in the present modification example, the transmitter 381 moves forward or rearward together with the bearing holder 370. For example, the transmitter 381 is fixed to an outer periphery of the bearing holder 370.

In a case where the transmitter 381 and the receiver 382 are disposed to face each other with a gap therebetween in the radial direction of the screw 330, unlike the case where the transmitter 381 and the receiver 382 are disposed to face each other with a gap therebetween in the axial direction, even when the transmitter 381 moves forward or rearward with respect to the plasticizing motor 340 when the injection motor 350 is driven, the gap between the transmitter 381 and the receiver 382 is kept constant. Further, since the transmitter 381 is moved forward or rearward together with the bearing holder 370, it is not necessary to loosen the wire 383.

For example, the transmitter 381 is directly connected to the outer edge of the screw attachment portion 372 of the bearing holder 370 and is provided in a ring shape. The transmitter 381 may be connected to the outer edge of the screw attachment portion 372 of the bearing holder 370 via a connection member (not shown) .

Meanwhile, the receiver 382 is directly connected to the rear end surface of the inner flange portion 315b and is provided in a ring shape. The receiver 382 may be directly connected to an inner edge of the tubular portion 315a. Further, the receiver 382 may be connected to the inner edge of the tubular portion 315a or the rear end surface of the inner flange portion 315b via a connection member (not shown).

In the present modification example as well, the second tubular body 317 (see Fig. 6) may be disposed between the tubular body 315 and the front flange 307, as in the first modification example. The wireless communication unit 380 is housed inside the second tubular body 317. The coupling 375 can be disposed in front of the wireless communication unit 380, and the first bolt 378 and the second bolt 379 can be operated from the window 316 of the tubular body 315.

### (Fifth Modification Example]

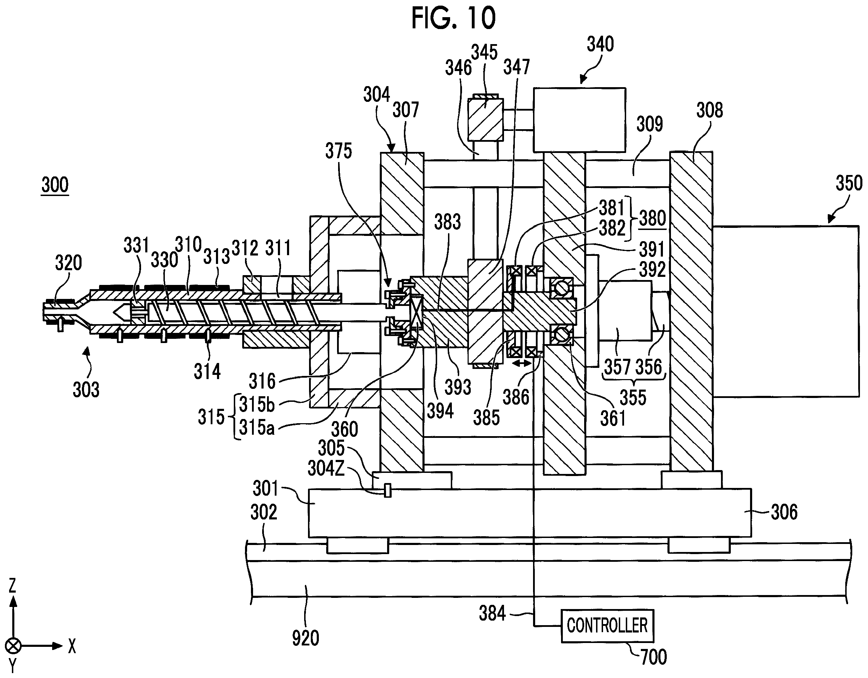

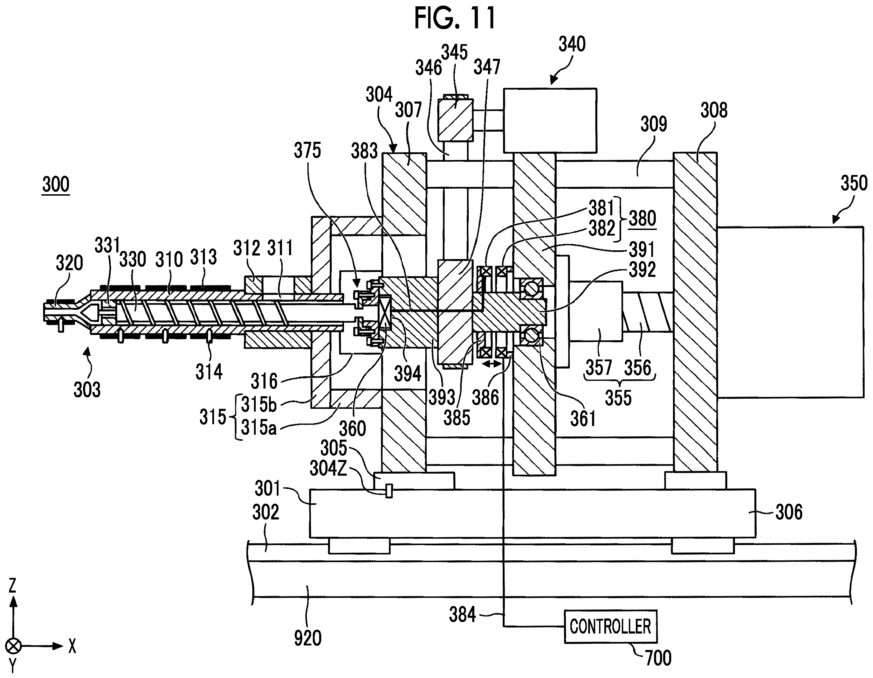

Fig. 10 is a view showing a state when injection of an injection unit according to a fifth modification example starts. Fig. 11 is a view showing a state when the injection of the injection unit according to the fifth modification example is completed. Hereinafter, differences between the present modification example and the above embodiments or the like will be mainly described. The injection unit 300 of the above embodiments or the like includes the drive shaft 362 which is moved forward or rearward while being rotated by the injection motor 350, and the bearing holder 370 which rotatably supports the drive shaft 362 via the bearing 361. Meanwhile, the injection unit 300 of the present modification example includes a movable plate 391 which is moved forward or rearward by the injection motor 350, a rotary shaft 392 which is rotatably supported by the movable plate 391 via the bearing 361, and a holder 393 which is rotated together with the rotary shaft 392.

The movable plate 391 is disposed between the front flange 307 and the rear flange 308, and moves along the connection rod 309. The connection rod 309 is used as a guide for the movable plate 391. The guide of the movable plate 391 may be provided separately from the connection rod 309, and may be laid on the upper surface of the slide base 301, for example.

The cylinder 310 is attached to the front flange 307. The cylinder 310 is disposed in front of the front flange 307 and is attached to the front flange 307 via the tubular body 315. Meanwhile, the injection motor 350 is attached to the rear flange 308. The plasticizing motor 340 is attached to the movable plate 391.

The plasticizing motor 340 rotates the screw 330. The rotary motion of the plasticizing motor 340 is transmitted to the holder 393 via a drive pulley 345, a belt 346, and a driven pulley 347, and further transmitted from the holder 393 to the screw 330. The drive pulley 345 is fixed to the output shaft of the plasticizing motor 340 and rotated by the plasticizing motor 340. The belt 346 is hung around the drive pulley 345 and the driven pulley 347. The driven pulley 347 is rotated according to a rotation of the drive pulley 345. The driven pulley 347 is disposed between the holder 393 and the rotary shaft 392 and is rotated together with both the holder 393 and the rotary shaft 392.

The injection motor 350 moves the screw 330 forward or rearward. The rotary motion of the injection motor 350 is converted into a linear motion of the movable plate 391 by a motion conversion mechanism 355. A plurality of the motion conversion mechanisms 355 may be provided symmetrically about the rotation center line of the screw 330 (only one is shown in Figs. 10 and 11). Each of the motion conversion mechanisms 355 includes a screw shaft 356 and a screw nut 357 which is screwed to the screw shaft 356. A ball or a roller may be interposed between the screw shaft 356 and the screw nut 357. The screw nut 357 is fixed to the movable plate 391. When the injection motor 350 is driven, the screw shaft 356 is rotated and the screw nut 357 is moved forward or rearward. As a result, the movable plate 391 is moved forward or rearward, and the screw 330 is moved forward or rearward.

The load detector 360 detects the load between the screw 330 and the bearing 361, as in the above embodiments. Since the load detector 360 is disposed near the screw 330, the ratio of the sliding resistance of the mechanical element to the load detected by the load detector 360 can be reduced. Even if the sliding resistance varies, since the ratio of the sliding resistance is small, the accuracy of detecting the pressure acting between the screw 330 and the molding material can be improved.

As shown in Figs. 10 and 11, the load detector 360 may be disposed immediately behind the screw 330. For example, the screw 330 is attached to the holder 393 via the load detector 360. The holder 393 has a recessed portion 394 for accommodating the load detector 360 on the front end surface of the holder 393. For example, the load detector 360 is a column type detector. The front end surface of the load detector 360 is in contact with the screw 330 at the central portion thereof and is in contact with the coupling 375 at the peripheral edge portion thereof. The coupling 375 couples the screw 330 and the holder 393 to each other.

As described above, the load detector 360 is disposed immediately behind the screw 330. Therefore, the ratio of the sliding resistance of the mechanical element to the load detected by the load detector 360 can be made smaller. Therefore, the accuracy of detecting the pressure acting between the screw 330 and the molding material can be further improved.

Meanwhile, since the load detector 360 detects the load between the screw 330 and the bearing 361, the load detector 360 is rotated together with the screw 330.

Therefore, the injection molding machine 10 further includes the wireless communication unit 380 which wirelessly transmits the signal of the load detected by the load detector 360, as in the above embodiments. The wireless communication unit 380 includes the transmitter 381 which transmits the signal of the load and the receiver 382 which receives the signal of the load transmitted from the transmitter 381.

The transmitter 381 and the receiver 382 transmit and receive a signal by radio waves or light. Since the transmitter 381 and the receiver 382 are not connected to each other by a wire for transmitting the signal, it is possible to prevent the wire from being twisted off by the rotation of the load detector 360.

It possible to dispose the load detector 360 between the screw 330 and the bearing 361 by the wireless communication unit 380. Since the load detector 360 is disposed near the screw 330, the accuracy of detecting the pressure acting between the screw 330 and the molding material can be improved.

The transmitter 381 is a rotor which is rotated together with the screw 330. For example, the transmitter 381 is connected to the outer edge of the rotary shaft 392 via the connection member 385 and is provided in a ring shape. The connection member 385 connects the transmitter 381 and the outer edge of the rotary shaft 392 to each other. However, the connection member 385 may connect the transmitter 381 and the rear end surface of the driven pulley 347 to each other. Further, the connection member 385 may be omitted, and the transmitter 381 may be directly connected to the outer edge of the rotary shaft 392 or the rear end surface of the driven pulley 347. The wire 383 passes through the hole of the holder 393, the hole of the driven pulley 347, and the hole of the rotary shaft 392, and electrically connects the load detector 360 and the transmitter 381 to each other.

The receiver 382 is a stator which cannot be rotated with the screw 330. For example, the receiver 382 is fixed to the stator of the plasticizing motor 340 and is provided in a ring shape. The receiver 382 is disposed coaxially with the transmitter 381 behind the transmitter 381. The transmitter 381 and the receiver 382 are disposed so as to face each other with a gap therebetween in the axial direction of the screw 330.

The receiver 382 is fixed to the stator of the plasticizing motor 340 via the connection member 386 and the movable plate 391. The connection member 386 connects the receiver 382 and the front end surface of the movable plate 391 to each other. However, the connection member 386 may connect the receiver 382 and the lower surface of the stator of the plasticizing motor 340 to each other. Further, the connection member 386 may be omitted, and the receiver 382 may be directly connected to the front end surface of the movable plate 391. In either case, since both the receiver 382 and the transmitter 381 are immovable forward or rearward relative to the plasticizing motor 340, the distance between the receiver 382 and the transmitter 381 is kept constant when the injection motor 350 is driven. Therefore, stable wireless communication is possible.

The wireless communication unit 380 may wirelessly supply the electric power consumed by the load detector 360 from the receiver 382 to the transmitter 381. Unlike the case where the battery is mounted inside the load detector 360, there is no concern that the battery will run out, and there is no need to replace the battery. If the distance between the transmitter 381 and the receiver 382 is short and the distance is constant, non-radiative wireless power supply can be adopted.

As shown in Figs. 10 and 11, the wireless communication unit 380 may be disposed on the side opposite to the cylinder 310 with reference to the driven pulley 347. That is, the wireless communication unit 380 may be disposed behind the driven pulley 347. The wireless communication unit 380 may be disposed behind the driven pulley 347 and in front of the movable plate 391.

### (Sixth Modification Example]

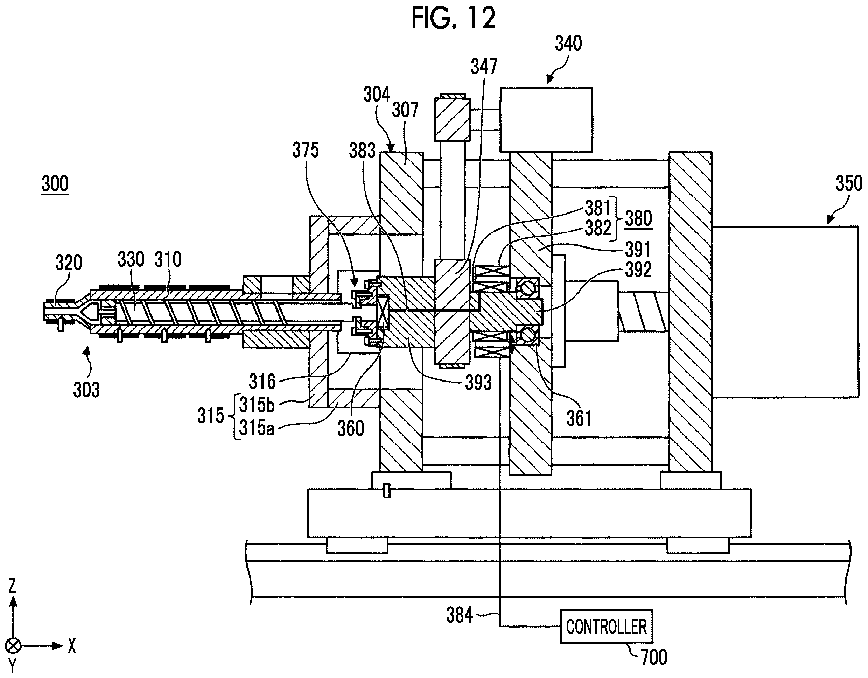

Fig. 12 is a view showing a state when injection of an injection unit according to a sixth modification example is completed. Hereinafter, differences between the present modification example and the fifth modification example will be mainly described. While the transmitter 381 and the receiver 382 are disposed to face each other with a gap therebetween in the axial direction of the screw 330 on the fifth modification example, in the present modification example, the transmitter 381 and the receiver 382 are disposed to face each other with a gap therebetween in the radial direction of the screw 330.

For example, the transmitter 381 is disposed closer to the screw 330 than the receiver 382. This is because the transmitter 381 is rotated together with the screw 330, unlike the receiver 382. As shown in Fig. 8, the outer peripheral surface of the ring-shaped transmitter 381 and the inner peripheral surface of the ring-shaped receiver 382 are disposed to face each other with a constant gap therebetween.

For example, the transmitter 381 is directly connected to the outer edge of the rotary shaft 392 and is provided in a ring shape. The transmitter 381 may be directly connected to the rear end surface of the driven pulley 347. Further, the transmitter 381 may be connected to the outer edge of the rotary shaft 392 or the rear end surface of the driven pulley 347 via a connection member (not shown).

Meanwhile, the receiver 382 is directly connected to the front end surface of the movable plate 391 and is provided in a ring shape. The receiver 382 may be connected to the front end surface of the movable plate 391 or the lower end surface of the stator of the plasticizing motor 340 via a connection member (not shown).

### (Seventh Modification Example]

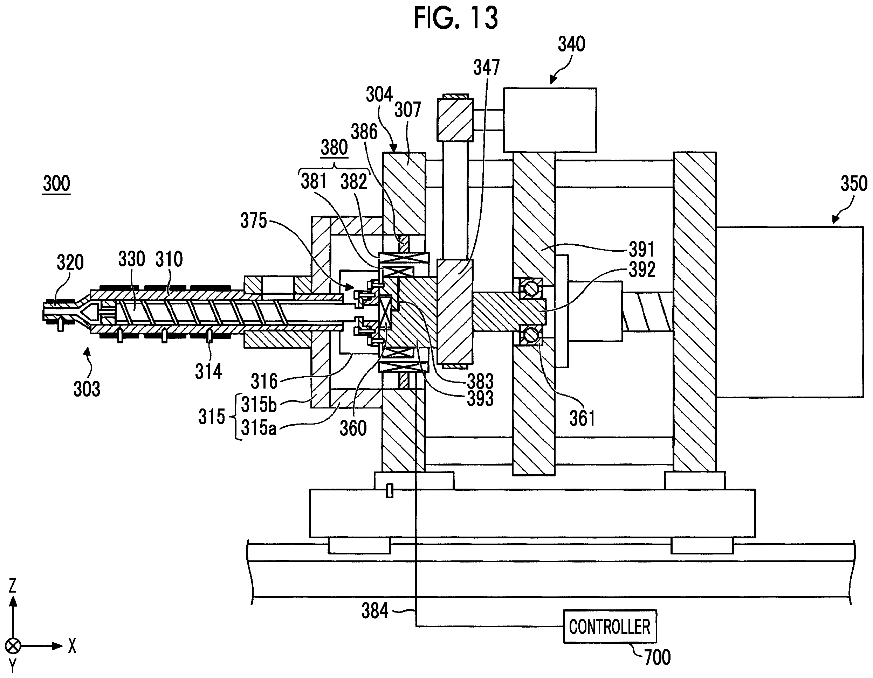

Fig. 13 is a view showing a state when injection of an injection unit according to a seventh modification example is completed. Hereinafter, differences between the present modification example and the sixth modification example will be mainly described. While the wireless communication unit 380 of the sixth modification example is disposed behind the driven pulley 347, the wireless communication unit 380 of the present modification example is disposed in front of the driven pulley 347. According to the present modification example, the length of the wire 383 can be shortened because the wire 383 does not have to pass through the hole or the like of the driven pulley 347.

For example, the transmitter 381 of the wireless communication unit 380 is directly connected to the outer edge of the holder 393 and provided in a ring shape. The wire 383 passes through the hole of the holder 393 and electrically connects the load detector 360 and the transmitter 381 to each other. The transmitter 381 may be directly connected to the front end surface of the driven pulley 347. Further, the transmitter 381 may be connected to the outer edge of the holder 393 or the front end surface of the driven pulley 347 via a connection member (not shown).

Meanwhile, the receiver 382 of the wireless communication unit 380 is connected to the inner edge of the front flange 307 via a connection member 386 and is provided in a ring shape. The receiver 382 may be connected to the inner edge of the tubular portion 315a or the rear end surface of the inner flange portion 315b via the connection member 386. Further, the connection member 386 may be omitted, and the receiver 382 may be directly connected to the inner edge of the front flange 307, the inner edge of the tubular portion 315a, or the rear end surface of the inner flange portion 315b.

In the case where the transmitter 381 and the receiver 382 are disposed to face each other with a gap therebetween in the radial direction of the screw 330, unlike the case where the transmitter 381 and the receiver 382 are disposed to face each other with a gap therebetween in the axial direction, even when the plasticizing motor 340 moves forward or rearward with respect to the receiver 382 when the injection motor 350 is driven, the gap between the receiver 382 and the transmitter 381 is kept constant.

Hereinbefore, the embodiment of the injection molding machine is described. However, the present invention is not limited to the above embodiment. Its scope is defined by the appended claims.

For example, in the above-described embodiment, the wireless communication unit 380 is used, but a contact type unit such as a slip ring may be used as the load signal transmission device.

### Brief Description of the Reference Symbols

310: cylinder
330: screw
340: plasticizing motor (rotation drive source)
350: injection motor (forward/rearward movement drive source)
360: load detector
361: bearing
380: wireless communication unit

## Claims

1. An injection molding machine (10) comprising:
a cylinder (310) configured to heat a molding material;
a screw (330) which is disposed so as to be rotatable and movable forward or rearward inside the cylinder (310);
a rotation drive source (340) configured to rotate the screw (330);
a forward/rearward movement drive source (350) configured to move the screw (330) forward or rearward;
a load detector (360) configured to detect a load transmitted between the forward/rearward movement drive source (350) and the screw (330); and
a bearing (361) configured to rotatably support the screw (330), wherein
the load detector (360) is configured to detect a load between the screw (330) and the bearing (361),
the injection molding machine (10) further comprises a wireless communication unit (380) configured to wirelessly transmit a signal of the load detected by the load detector (360),
**characterized in that**
the wireless communication unit (380) has a rotor (381) which is configured to rotate together with the screw (330) and a stator (382) which is not rotated together with the screw (330),
the rotor (381) and the stator (382) are disposed coaxially, and
the wireless communication unit (380) is configured to wirelessly transmit the signal from the rotor (381) to the stator (382) .

2. The injection molding machine (10) according to claim 1,
wherein both the rotor (381) and the stator (382) of the wireless communication unit (380) are immovable relative to the rotation drive source (340).

3. The injection molding machine (10) according to claim 2,
wherein the wireless communication unit (380) is configured to wirelessly supply electric power consumed by the load detector (360) from the stator (382) to the rotor (381).

4. The injection molding machine (10) according to claim 2 or 3,
wherein the rotor (381) and the stator (382) are disposed to face each other with a gap therebetween in an axial direction of the screw (330).

5. The injection molding machine (10) according to claim 2 or 3,
wherein the rotor (381) and the stator (382) are disposed to face each other with a gap therebetween in a radial direction of the screw (330).

6. The injection molding machine (10) according to any one of claims 1 to 5, further comprising:
a drive shaft (362) which is configured to be moved forward or rearward while being rotated by the forward/rearward movement drive source (350); and
a bearing holder (370) which is configured to rotatably support the drive shaft (362) via the bearing (361),
wherein the screw (330) is attached to the bearing holder (370) via the load detector (360).

7. The injection molding machine (10) according to claim 6,
wherein a plasticizing motor (340) which is the rotation drive source (340) and the bearing holder (370) are spline-coupled to each other, and
the wireless communication unit (380) is disposed on a side opposite to the cylinder (310) with reference to the plasticizing motor (340).

8. The injection molding machine (10) according to claim 6,
wherein a plasticizing motor (340) which is the rotation drive source (340) and the bearing holder (370) are spline-coupled to each other, and
the wireless communication unit (380) is disposed on a side of the cylinder (310) with reference to the plasticizing motor (340) .

9. The injection molding machine (10) according to claim 8, further comprising:
a coupling (375) configured to couple the screw (330) and the bearing holder (370) to each other,
wherein the coupling (375) is disposed on the side of the cylinder (310) with reference to the wireless communication unit (380) .

10. The injection molding machine (10) according to any one of claims 1 to 5, further comprising:
a movable plate (391) which is configured to be moved forward or rearward by the forward/rearward movement drive source (350);
a rotary shaft (392) which is configured to be rotatably held by the movable plate (391) via the bearing (361); and
a holder (393) which is configured to be rotated together with the rotary shaft (392),
wherein the screw (330) is attached to the holder (393) via the load detector (360).

11. The injection molding machine (10) according to claim 10, further comprising:
a drive pulley (345) which is configured to be rotated by the rotation drive source (340);
a driven pulley (347) which is configured to be rotated according to a rotation of the drive pulley (345); and
a belt (346) which is configured to be hung around the drive pulley (345) and the driven pulley (347),
wherein the driven pulley (347) is disposed between the holder (393) and the rotary shaft (392) and is configured to be rotated together with both the holder (393) and the rotary shaft (392), and
the wireless communication unit (380) is disposed on a side opposite to the cylinder (310) with reference to the driven pulley (347).

12. The injection molding machine (10) according to claim 10, further comprising:
a drive pulley (345) which is configured to be rotated by the rotation drive source (340);
a driven pulley (347) which is configured to be rotated according to a rotation of the drive pulley (345); and
a belt (346) which is configured to be hung around the drive pulley (345) and the driven pulley (347),
wherein the driven pulley (347) is disposed between the holder (393) and the rotary shaft (392) and is configured to be rotated together with both the holder (393) and the rotary shaft (392), and
the wireless communication unit (380) is disposed on a side of the cylinder (310) with reference to the driven pulley (347) .

## Patentansprüche

1. Spritzgießmaschine (10), umfassend:
einen Zylinder (310), der konfiguriert ist, ein Formmaterial zu erwärmen;
eine Schnecke (330), die derart angeordnet ist, dass sie drehbar und vorwärts oder rückwärts innerhalb des Zylinders (310) beweglich ist;
eine Drehantriebsquelle (340), die konfiguriert ist, die Schnecke (330) zu drehen;
eine Vorwärts-/Rückwärtsbewegungs-Antriebsquelle (350), die konfiguriert ist, die Schnecke (330) vorwärts oder rückwärts zu bewegen;
einen Lastdetektor (360), der konfiguriert ist, eine Last zu detektieren, die zwischen der Vorwärts-/Rückwärtsbewegungs-Antriebsquelle (350) und der Schnecke (330) übertragen wird; und
ein Lager (361), das konfiguriert ist, die Schnecke (330) drehbar zu lagern,
wobei
der Lastdetektor (360) konfiguriert ist, eine Last zwischen der Schnecke (330) und dem Lager (361) zu detektieren,
die Spritzgießmaschine (10) ferner eine Drahtloskommunikationseinheit (380) umfasst, die konfiguriert ist, ein Signal der durch den Lastdetektor (360) detektierten Last drahtlos zu übertragen,
**dadurch gekennzeichnet, dass**
die Drahtloskommunikationseinheit (380) einen Rotor (381), der konfiguriert ist, sich zusammen mit der Schnecke (330) zu drehen, und einen Stator (382), der nicht zusammen mit der Schnecke (330) gedreht wird, aufweist,
der Rotor (381) und der Stator (382) koaxial angeordnet sind, und
die Drahtlos-Kommunikationseinheit (380) konfiguriert ist, das Signal von dem Rotor (381) drahtlos an den Stator (382) zu übertragen.

2. Spritzgießmaschine (10) nach Anspruch 1,
wobei sowohl der Rotor (381) als auch der Stator (382) der Drahtloskommunikationseinheit (380) relativ zu der Drehantriebsquelle (340) unbeweglich sind.

3. Spritzgießmaschine (10) nach Anspruch 2, wobei die Drahtloskommunikationseinheit (380) konfiguriert ist, elektrische Energie, die von dem Lastdetektor (360) verbraucht wird, von dem Stator (382) drahtlos an den Rotor (381) zuzuführen.

4. Spritzgießmaschine (10) nach Anspruch 2 oder 3,
wobei der Rotor (381) und der Stator (382) derart angeordnet sind, dass sie einander mit einem Spalt dazwischen in einer axialen Richtung der Schnecke (330) zugewandt sind.

5. Spritzgießmaschine (10) nach Anspruch 2 oder 3,
wobei der Rotor (381) und der Stator (382) derart angeordnet sind, dass sie einander mit einem Spalt dazwischen in einer radialen Richtung der Schnecke (330) zugewandt sind.

6. Spritzgießmaschine (10) nach einem der Ansprüche 1 bis 5, ferner umfassend:
eine Antriebswelle (362), die konfiguriert ist, vorwärts oder rückwärts bewegt zu werden, während sie durch die Vorwärts-/Rückwärtsbewegungs-Antriebsquelle (350) gedreht wird; und
einen Lagerhalter (370), der konfiguriert ist, die Antriebswelle (362) via das Lager (361) drehbar zu lagern,
wobei die Schnecke (330) an dem Lagerhalter (370) via den Lastdetektor (360) befestigt ist.

7. Spritzgießmaschine (10) nach Anspruch 6,
wobei ein Plastifiziermotor (340), der die Drehantriebsquelle (340) ist, und der Lagerhalter (370) miteinander keilverzahnt sind, und
die Drahtloskommunikationseinheit (380) auf einer Seite gegenüber dem Zylinder (310) mit Bezug auf den Plastifiziermotor (340) angeordnet ist.

8. Spritzgießmaschine (10) nach Anspruch 6,
wobei ein Plastifiziermotor (340), der die Drehantriebsquelle (340) ist, und der Lagerhalter (370) miteinander keilverzahnt sind, und
die Drahtloskommunikationseinheit (380) auf einer Seite des Zylinders (310) mit Bezug auf den Plastifiziermotor (340) angeordnet ist.

9. Spritzgießmaschine (10) nach Anspruch 8, ferner umfassend:
eine Kupplung (375), die konfiguriert ist, die Schnecke (330) und den Lagerhalter (370) miteinander zu koppeln,
wobei die Kupplung (375) auf der Seite des Zylinders (310) mit Bezug auf die Drahtloskommunikationseinheit (380) angeordnet ist.

10. Spritzgießmaschine (10) nach einem der Ansprüche 1 bis 5, ferner umfassend:
eine bewegliche Platte (391), die konfiguriert ist, durch die Vorwärts-/Rückwärts-Bewegungs-Antriebsquelle (350) vorwärts oder rückwärts bewegt zu werden;
eine Drehwelle (392), die konfiguriert ist, durch die bewegliche Platte (391) via das Lager (361) drehbar gehalten zu werden; und
einen Halter (393), der konfiguriert ist, zusammen mit der Drehwelle (392) gedreht zu werden,
wobei die Schnecke (330) an dem Halter (393) via den Lastdetektor (360) angebracht ist.

11. Spritzgießmaschine (10) nach Anspruch 10, ferner umfassend:
eine Antriebsriemenscheibe (345), die konfiguriert ist, durch die Drehantriebsquelle (340) gedreht zu werden;
eine Abtriebsriemenscheibe (347), die konfiguriert ist, gemäß einer Drehung der Antriebsriemenscheibe (345) gedreht zu werden; und
einen Riemen (346), der konfiguriert ist, um die Antriebsriemenscheibe (345) und die Abtriebsriemenscheibe (347) herum aufgehängt zu sein,
wobei die Abtriebsriemenscheibe (347) zwischen dem Halter (393) und der Drehwelle (392) angeordnet ist und konfiguriert ist, zusammen mit sowohl dem Halter (393) als auch der Drehwelle (392) gedreht zu werden, und
die Drahtloskommunikationseinheit (380) auf einer Seite gegenüber dem Zylinder (310) mit Bezug auf die Abtriebsriemenscheibe (347) angeordnet ist.

12. Spritzgießmaschine (10) nach Anspruch 10, ferner umfassend:
eine Antriebsriemenscheibe (345), die konfiguriert ist, durch die Drehantriebsquelle (340) gedreht zu werden;
eine Abtriebsriemenscheibe (347), die konfiguriert ist, gemäß einer Drehung der Antriebsriemenscheibe (345) gedreht zu werden; und
einen Riemen (346), der konfiguriert ist, um die Antriebsriemenscheibe (345) und die Abtriebsriemenscheibe (347) herum aufgehängt zu sein,
wobei die Abtriebsriemenscheibe (347) zwischen dem Halter (393) und der Drehwelle (392) angeordnet ist und konfiguriert ist, zusammen mit sowohl dem Halter (393) als auch der Drehwelle (392) gedreht zu werden, und
die Drahtloskommunikationseinheit (380) auf einer Seite des Zylinders (310) mit Bezug auf die Abtriebsriemenscheibe (347) angeordnet ist.

## Revendications

1. Une machine de moulage par injection (10) comprenant :
un cylindre (310) configuré pour chauffer un matériau de moulage ;
une vis (330) qui est disposée de manière à pouvoir tourner et se déplacer vers l'avant ou vers l'arrière à l'intérieur du cylindre (310) ;
une source d'entraînement en rotation (340) configurée pour faire tourner la vis (330) ;
une source d'entraînement de mouvement vers l'avant / vers l'arrière (350) configurée pour déplacer la vis (330) vers l'avant ou vers l'arrière ;
un détecteur de charge (360) configuré pour détecter une charge transmise entre la source d'entraînement de mouvement vers l'avant / vers l'arrière (350) et la vis (330) ; et
un palier (361) configuré pour prendre en charge de manière rotative la vis (330) ;
dans laquelle le détecteur de charge (360) est configuré pour détecter une charge entre la vis (330) et le palier (361) ;
la machine de moulage par injection (10) comprend en outre une unité de communication sans fil (380) configurée pour transmettre sans fil un signal de la charge détectée par le détecteur de charge (360) ;
**caractérisée en ce que** :
l'unité de communication sans fil (380) présente un rotor (381) qui est configuré pour tourner conjointement avec la vis (330) et un stator (382) qui ne tourne pas conjointement avec la vis (330) ;
le rotor (381) et le stator (382) sont disposés de façon coaxiale ; et
l'unité de communication sans fil (380) est configurée pour transmettre sans fil le signal, du rotor (381) au stator (382).

2. La machine de moulage par injection (10) selon la revendication 1,
dans laquelle, à la fois le rotor (381) et le stator (382) de l'unité de communication sans fil (380) sont immobiles par rapport à la source d'entraînement en rotation (340).

3. La machine de moulage par injection (10) selon la revendication 2,
dans laquelle l'unité de communication sans fil (380) est configurée pour fournir, sans fil, de l'énergie électrique consommée par le détecteur de charge (360), du stator (382) au rotor (381).

4. La machine de moulage par injection (10) selon la revendication 2 ou 3,
dans laquelle le rotor (381) et le stator (382) sont disposés de façon à se faire mutuellement face, avec un espace entre eux dans une direction axiale de la vis (330).

5. La machine de moulage par injection (10) selon la revendication 2 ou 3,
dans laquelle le rotor (381) et le stator (382) sont disposés de façon à se faire mutuellement face, avec un espace entre eux dans une direction radiale de la vis (330).

6. La machine de moulage par injection (10) selon l'une quelconque des revendications 1 à 5, comprenant en outre :
un arbre d'entraînement (362) qui est configuré pour être déplacé vers l'avant ou vers l'arrière tout en étant entraîné en rotation par la source d'entraînement de mouvement vers l'avant / vers l'arrière (350) ; et
un support de palier (370) qui est configuré pour prendre en charge de manière rotative l'arbre d'entraînement (362) par l'intermédiaire du palier (361) ;
dans laquelle la vis (330) est fixée au support de palier (370) par l'intermédiaire du détecteur de charge (360).

7. La machine de moulage par injection (10) selon la revendication 6,
dans laquelle un moteur de plastification (340) qui correspond à la source d'entraînement en rotation (340), et le support de palier (370), sont couplés par cannelures l'un à l'autre ; et
dans laquelle l'unité de communication sans fil (380) est disposée sur un côté opposé au cylindre (310) par rapport au moteur de plastification (340).

8. La machine de moulage par injection (10) selon la revendication 6,
dans laquelle un moteur de plastification (340), qui correspond à la source d'entraînement en rotation (340), et le support de palier (370), sont couplés par cannelures l'un à l'autre ; et
dans laquelle l'unité de communication sans fil (380) est disposée sur un côté du cylindre (310) par rapport au moteur de plastification (340).

9. La machine de moulage par injection (10) selon la revendication 8, comprenant en outre :
un couplage (375) configuré pour coupler la vis (330) et le support de palier (370) l'un à l'autre ;
dans laquelle le couplage (375) est disposé sur le côté du cylindre (310) par rapport à l'unité de communication sans fil (380).

10. La machine de moulage par injection (10) selon l'une quelconque des revendications 1 à 5, comprenant en outre :
une plaque mobile (391) qui est configurée pour être déplacée vers l'avant ou vers l'arrière par la source d'entraînement de mouvement vers l'avant / vers l'arrière (350) ;
un arbre rotatif (392) qui est configuré pour être maintenu en rotation par la plaque mobile (391), par l'intermédiaire du palier (361) ; et
un support (393) qui est configuré pour être entraîné en rotation conjointement avec l'arbre rotatif (392) ;
dans laquelle la vis (330) est fixée au support (393) par l'intermédiaire du détecteur de charge (360).

11. La machine de moulage par injection (10) selon la revendication 10, comprenant en outre :
une poulie d'entraînement (345) qui est configurée pour être entraînée en rotation par la source d'entraînement en rotation (340) ;
une poulie entraînée (347) qui est configurée pour être entraînée en rotation selon une rotation de la poulie d'entraînement (345) ; et
une courroie (346) qui est configurée pour être suspendue autour de la poulie d'entraînement (345) et de la poulie entraînée (347) ;
dans laquelle la poulie entraînée (347) est disposée entre le support (393) et l'arbre rotatif (392), et est configurée pour être entraînée en rotation conjointement avec le support (393) et l'arbre rotatif (392) ; et
dans laquelle l'unité de communication sans fil (380) est disposée sur un côté opposé au cylindre (310) par rapport à la poulie entraînée (347).

12. La machine de moulage par injection (10) selon la revendication 10, comprenant en outre :
une poulie d'entraînement (345) qui est configurée pour être entraînée en rotation par la source d'entraînement en rotation (340) ;
une poulie entraînée (347) qui est configurée pour être entraînée en rotation selon une rotation de la poulie d'entraînement (345) ; et
une courroie (346) qui est configurée pour être suspendue autour de la poulie d'entraînement (345) et de la poulie entraînée (347) ;
dans laquelle la poulie entraînée (347) est disposée entre le support (393) et l'arbre rotatif (392), et est configurée pour être entraînée en rotation conjointement avec le support (393) et l'arbre rotatif (392) ; et
l'unité de communication sans fil (380) est disposée sur un côté du cylindre (310) par rapport à la poulie entraînée (347).
